# EUROPÄISCHE PATENTANMELDUNG

(11) **EP 4 518 067 A2**
(43) Veröffentlichungstag der Anmeldung: **05.03.2025**
(21) Anmeldenummer: 24185714.3
(22) Anmeldetag: 01.07.2024
(51) Int. Cl.: H02H 3/08, H02H 7/26

(54) **VERFAHREN ZUR ERKENNUNG EINER ÜBERLAST IN EINEM STROMVERSORGUNGSSYSTEM MIT BIDIREKTIONALER LADEINFRASTRUKTUR**

(30) Priorität: 07.08.2023 DE 102023120859
(71) Anmelder: Bender GmbH & Co. KG, 35305 Grünberg (DE)
(72) Erfinder: HAUB, Dennis, 35428 Langgöns (DE); MORICH, Lars, 65604 Elz (DE)
(74) Vertreter: advotec.

(57) **Zusammenfassung**

Die Erfindung betrifft ein Verfahren zur Erkennung einer Überlast in einem Stromversorgungssystem (2), welches einen Verteilungsstromkreis (4) mit mindestens zwei Endstromkreisen (6) mit bidirektionaler Ladeinfrastruktur aufweist. Es erfolgt ein Auswerten der Stromstärke und der Stromflussrichtung, die sich in jedem Endstromkreis (6) mit bidirektionaler Ladeinfrastruktur aufgrund einer angefragten Ladeleistung und/oder einer angefragten Rückspeiseleistung ergeben würden, in einem kombinierten Lade- und Rückspeisemanagement (20), welches für jeden Leitungsabschnitt des Verteilungsstromkreises (4) einen Betriebsstrom berechnet und eine mögliche Überlast vorausschauend erkennt, um ein Auslösen einer Überstromschutzeinrichtung (10) zu vermeiden.

## Beschreibung

Die Erfindung betrifft ein Verfahren zur Erkennung einer Überlast in einem Stromversorgungssystem, welches einen Verteilungsstromkreis mit mindestens zwei Endstromkreisen mit bidirektionaler Ladeinfrastruktur aufweist.

Als eine wesentliche Forderung aus der Normenreihe DIN VDE 0100 sind Kabel, Leitungen und Geräte gegen Überstrom (Überlast und Kurzschluss) zu schützen. Eine Überlast in der elektrischen Installation entsteht in der Regel dann, wenn ein oder mehrere Verbraucher mehr Strom ziehen, als das Netz zur Verfügung stellt. In gleicher Weise kann eine Überlast auftreten, falls mehrere Quellen einen größeren Strom einspeisen können, als der, für den die elektrische Installation ausgelegt ist. In beiden Fällen entstehen Über(last)ströme, die den stromführenden Leiter erwärmen und damit zu einer thermischen Gefährdung führen.

Die im Rahmen der Norm DIN VDE 0100-722 (IEC 60364-7-722) festgelegten besonderen Anforderungen betreffen Stromkreise für die Energieversorgung von Elektrofahrzeugen.

Obwohl für jeden Endstromkreis mit einer angeschlossenen Ladeeinrichtung gemäß der Norm DIN VDE 0100-722 (IEC 60364-7-722) eine Überstromschutzeinrichtung zwingend vorgeschriebenen ist, kann infolge der Rückspeisefähigkeit der Ladeeinrichtungen eine Überlastsituation im Verteilungsstromkreis entstehen. Gleiches gilt für den Kurzschlussfall in einem Verteilungsstromkreis, wenn neben dem speisenden Stromversorgungssystem weitere Stromerzeugungseinrichtungen, wie bidirektionale Ladeeinrichtungen für Elektrofahrzeuge, zusätzlich Strom einspeisen. Somit bleibt festzustellen, dass insbesondere der Überstromschutz im Verteilungsstromkreis bislang von der Norm nicht hinreichend abgedeckt ist.

Zur Vermeidung der Überlast ist es theoretisch möglich, alle Endstromkreise sowie alle Leitungsabschnitte des Verteilungsstromkreises mit Überstromschutzeinrichtungen auszustatten, die auf den maximal möglichen Überlastfall in dem entsprechenden Leiterabschnitt ausgelegt sind. Alternativ kann der komplette Verteilungsstromkreis mit größtmöglichem Leiterquerschnitt für den maximal anzunehmenden Überlastfall hin dimensioniert werden und eine gemeinsame Überstromschutzeinrichtung zur Absicherung des Verteilungsstromkreises eingesetzt werden.

Beide Varianten haben den Nachteil, dass bereits bei wenigen angeschlossenen Einspeise- und Verbrauchseinrichtungen erhebliche Leiterquerschnitte verbaut werden müssten oder dass die gemeinsame Überstromschutzeinrichtung bei einer Auslösung die gesamte Installation trennen würde, was die Verfügbarkeit verringert. Diese Lösungen erlauben daher keine Erweiterung einer bestehenden elektrischen Anlage mit zusätzlichen bidirektionalen Ladeeinrichtungen. Gleiches gilt für eine Änderung der bestehenden Installation durch Austausch einer unidirektionalen durch eine bidirektionale Ladeinfrastruktur.

Zwar gibt es in der Norm DIN VDE 0100-802 (IEC 60364-8-2) bereits Ansätze, die den Überstromschutz bei dem Vorhandensein mehrerer Stromquellen (neben dem Stromversorgungssystem existieren weitere Erzeugungsanlagen wie PV-Anlagen) betreffen, allerdings herrscht im Falle der Elektromobilität die spezielle Situation vor, dass an jedem rückspeisefähigen Ladepunkt eine unbekannte Verbrauchs- und Erzeugungseinrichtung (Elektrofahrzeug) mit unbekannter Rückspeiseleistung angeschlossen wird.

Im Verteilungsstromkreis herrscht somit eine ständig wechselnde Strombelastung, je nachdem an welchem Lade-/Rückspeisepunkt geladen oder rückgespeist wird.

Ein Verfahren zur Detektion der dynamisch wechselnden Energieflüsse sowie zu deren Auswertung und Regelung zur Vermeidung einer Überlast ist nicht bekannt.

Der vorliegenden Erfindung liegt somit die Aufgabe zu Grunde, eine mögliche Überlast in einem Stromversorgungssystem mit bidirektionaler Ladeinfrastruktur zu erkennen und damit die Auslösung einer Überstromschutzeinrichtung zu vermeiden.

Diese Aufgabe wird durch ein Verfahren gelöst, wobei ein Auswerten der Stromstärke und der Stromflussrichtung, die sich in jedem Endstromkreis mit bidirektionaler Ladeinfrastruktur aufgrund einer angefragten Ladeleistung und/oder einer angefragten Rückspeiseleistung ergeben würden, in einem kombinierten Lade- und Rückspeisemanagement erfolgt, welches für jeden Leitungsabschnitt des Verteilungsstromkreises einen Betriebsstrom berechnet und eine mögliche Überlast vorausschauend erkennt, um ein Auslösen einer Überstromschutzeinrichtung zu vermeiden.

In jedem Endstromkreis mit bidirektionaler Ladeinfrastruktur werden zunächst die Stromstärke und die Stromflussrichtung ermittelt, die sich aufgrund der angefragten Ladeleistung (Stromfluss von dem Stromversorgungssystem zum Verbraucher) und/oder der angefragten Rückspeiseleistung (Stromfluss von dem Verbraucher in das Stromversorgungssystem) ergeben würden. Diese Werte werden in einem kombinierten Lade-und Rückspeisemanagement zur Auswertung herangezogen, um für jeden Leitungsabschnitt des Verteilungsstromkreises einen Betriebsstrom zu berechnen. Der ermittelte Betriebsstrom erlaubt dann eine Aussage darüber, ob eine Gefährdung durch eine mögliche Überlast in dem betreffenden Leitungsabschnitt besteht. Eine Überlast liegt dann vor, falls der Betriebsstrom die zulässige Strombelastbarkeit des Kabels oder der Leitung überschreitet.

Bidirektionale Ladepunkte mit veränderlicher Rückspeiseleistung werden durch Überwachen der momentanen Stromstärke und der Stromflussrichtung sowie der in dem jeweiligen Endstromkreis angefragten Lade-und/oder Rückspeiseleistung in ein kombiniertes Lade- und Rückspeisemanagement mit einbezogen, um eine mögliche Überlast vorausschauend zu erkennen.

In Fortentwicklung und Erweiterung eines nach DIN VDE 0100-722 (IEC 60364-7-722) für den unidirektionalen Ladebetrieb vorgesehenen Lademanagement-Systems kann das erfindungsgemäße Lade- und Rückspeisemanagement durch Einbeziehung des Rückspeisevorgangs auch bei bidirektionalem Lade- und Rückspeisebetrieb eine mögliche Überlast im Verteilungsstromkreis feststellen und damit ein Auslösen von Überstrom-Schutzeinrichtungen verhindern.

Die Kombination aus Lade- und Rückspeisemanagement ermöglicht zudem eine Gesamtbetrachtung aller Energieflüsse, da sowohl Elektrofahrzeuge zur Ladung und Rückspeisung, als auch weitere Verbrauchseinrichtungen (z.B. Wärmepumpen oder Endgeräte einer Hausinstallation) und/oder Erzeugungseinrichtungen (z.B. PV-Anlagen) an die gleiche Niederspannungsinstallation (Verteilungsstromkreis) angeschlossen werden können.

In weiterer Ausgestaltung erfolgt eine Freigabe des Endstromkreises mit bidirektionaler Ladeinfrastruktur durch das Lade- und Rückspeisemanagement für einen Lade- oder einen Rückspeisevorgang nur dann, falls in allen betroffenen Leitungsabschnitten des Stromversorgungssystems die zulässige Strombelastbarkeit nicht überschritten wird.

Bevor ein weiterer angefragter Lade- oder Rückspeisevorgang in einem der Endstromkreise mit bidirektionaler Ladeinfrastruktur durch das Lade- und Rückspeisemanagement freigegeben wird, muss sichergestellt sein, dass alle betroffenen Leitungsabschnitte in dem Verteilungsstromkreis eine hinreichende Strombelastbarkeit haben, um die angefragte Ladeleistung und die angefragte Rückspeiseleistung tragen zu können. Ist dies nicht der Fall, wird die Anfrage, weitere Energie durch Elektrofahrzeuge zu beziehen oder Energie zurück zu speisen, so lange abgelehnt, bis der für die betroffenen Leitungsabschnitte prognostizierte Betriebsstrom wieder unterhalb der jeweils zulässigen Strombelastbarkeit liegt, sodass dann die betroffenen Leitungsabschnitte freigegeben werden können.

Vorteilhaft erfolgt die Freigabe des Endstromkreises mit bidirektionaler Ladeinfrastruktur durch das Lade- und Rückspeisemanagement mit Vorgeben einer maximalen Lade-Stromstärke und Rückspeise-Stromstärke.

Die gezielte Freigabe des Endstromkreises mit bidirektionaler Ladeinfrastruktur und damit von Stromkapazitäten für die Ladung oder Rückspeisung wird durch das Lade- und Rückspeisemanagement aktiv beeinflusst. Dies kann geschehen, indem die zulässige, maximale Lade- und/oder Rückspeiseleistung eines jeden Lade-/Rückspeiseverbundes durch Vorgabe einer maximalen Stromstärke durch das Lade- und Rückspeisemanagement für den jeweiligen Verbraucher/Erzeuger (Elektrofahrzeug) begrenzt wird.

Alternativ wird zur Vermeidung einer Überlast der Lade- und/oder Rückspeisebetrieb durch das Lade- und Rückspeisemanagement beendet oder es erfolgt eine Anpassung der Lade- und/oder Rückspeiseleistung.

Besteht eine Gefährdung durch einen zu hohen Betriebsstrom, wird von dem Lade- und Rückspeisemanagement ein Schaltsignal zum Beenden eines aktiven Lade-/Rückspeisevorgangs erzeugt.

Die Anpassung der Lade- und/oder Rückspeiseleistung verhindert, dass die zulässige Strombelastbarkeit überschritten wird.

Ob ein Verbraucher/Erzeuger aktiv Strom verbraucht/erzeugt, kann durch Rücklesen der Schalteinrichtungen der angeschlossenen Endstromkreise mit bidirektionaler Ladeinfrastruktur und des übergeordneten Lade-/Rückspeiseverbundes festgestellt werden.

Sowohl die Vorgabe einer begrenzten Stromstärke als auch das Beenden des Lade- und/oder Rückspeisebetriebs erfolgen dabei vor der Freigabe eines zusätzlich angefragten Lade-/Rückspeisevorgangs.

Mit Vorteil werden momentane Lade-und Rückspeise-Stromstärken in den Endstromkreisen mit bidirektionaler Ladeinfrastruktur sowie durch weitere aktive Erzeuger/Verbraucher bewirkte Lastströme in dem Verteilungsstromkreis zwischen den Endstromkreisen und an einem Anschlusspunkt des Verteilungsstromkreises erfasst und deren Daten zur Berechnung der Betriebsströme an das Lade- und Rückspeisemanagement weitergeleitet.

Um das Stromversorgungssystem als Stromquelle sowie Einspeisungen und Entnahmen weiterer an dem gleichen Verteilungsstromkreis angeschlossener Erzeuger (Erzeugerstrom), beispielsweise PV-Anlagen, oder angeschlossener Verbraucher (Bezugsstrom), beispielsweise Wärmepumpen oder an die Gebäudeinstallation angeschlossene Endgeräte, zu berücksichtigen, werden in den Endstromkreisen mit bidirektionaler Ladeinfrastruktur, in dem Verteilungsstromkreis zwischen den Endstromkreisen sowie am Anschlusspunkt des Verteilungsstromkreises Laststrommessungen durchgeführt, deren Daten an das Lade- und Rückspeisemanagement weitergeleitet werden. Unter einem Laststrom sei hier sowohl ein Bezugsstrom als auch ein Erzeugerstrom zu verstehen.

Im Zusammenwirken des Lade- und Rückspeiseverbundes mit den an den Verteilungsstromkreis angeschlossenen Erzeugern und Verbrauchern wird durch das Lade- und Rückspeisemanagement eine flexible bidirektionale Ladeinfrastruktur geschaffen, die die dynamisch wechselnden Energieflüsse im Hinblick auf eine Überlastvermeidung auswertet. Damit ist eine sichere Rückspeisung insbesondere unter Berücksichtigung des Leiterquerschnitts und der Verlegeart der elektrischen Anlage gewährleistet.

Das erfindungsgemäße kombinierte Lade- und Rückspeisemanagement löst somit die Aufgabe, die Auslösung einer Überstromschutzeinrichtung und den damit verbundenen Wartungsfall zu vermeiden. Der gezielte Eingriff auf einzelne Lade-/Rückspeisepunkte durch eine von der Strombelastbarkeit abhängige Freigabe der Endstromkreise mit bidirektionaler Ladeinfrastruktur verhindert eine Überlast im Verteilungsstromkreis und damit das Auslösen der Überstromschutzeinrichtungen.

Eine Überstromabsicherung des Verteilungsstromkreises durch entsprechende Überstromschutzeinrichtungen wird entsprechend des unidirektionalen Ladefalls dennoch als notwendig erachtet.

Weitere zweckmäßige Ausgestaltungsmerkmale werden anhand bevorzugter, in den Zeichnungen veranschaulichter Ausführungsbeispiele erläutert.

### Dabei zeigen:

- **Fig. 1**: schematisch den Aufbau eines Stromversorgungssystems mit bidi-rektionaler Ladeinfrastruktur und

- **Fig. 2**: die Struktur eines dem erfindungsgemäßen Verfahren zugrundelie-genden kombinierten Lade- und Rückspeisemanagements.

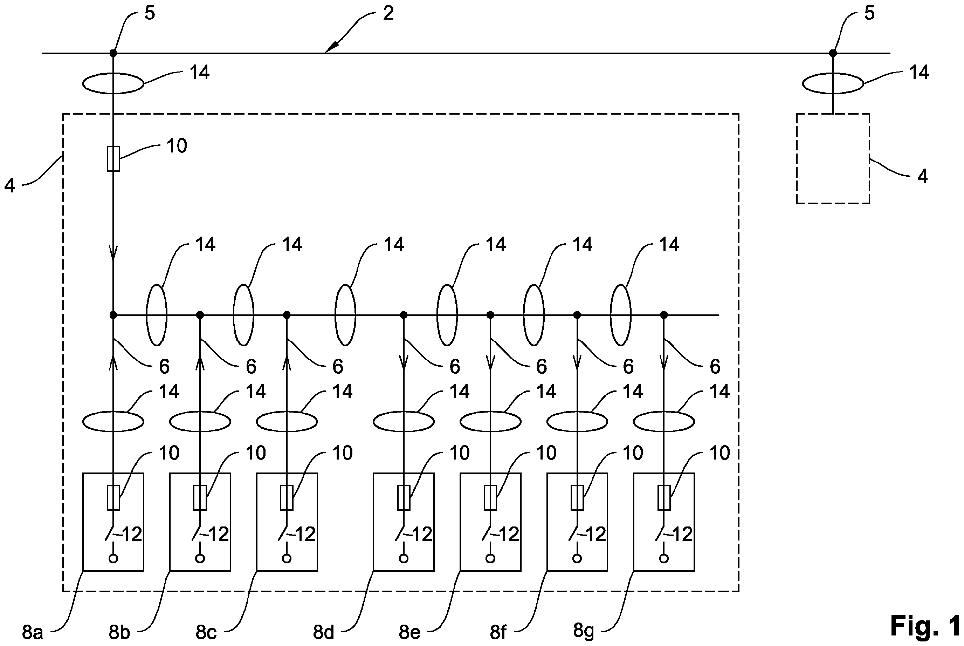

**Fig.1** zeigt den Aufbau eines Stromversorgungssystems 2 mit bidirektionaler Ladeinfrastruktur in schematischer Darstellung. An das Stromversorgungssystem 2 sind über Anschlussunkte 5 Verteilungsstromkreise 4 angebunden, die mehrere Endstromkreise 6 mit bidirektionaler Ladeinfrastruktur 6 aufweisen.

An die Endstromkreise 6 mit bidirektionaler Ladeinfrastruktur sind als beispielhafte (Strom-)Erzeuger drei im Rückspeisebetrieb arbeitende, stromeinspeisende Ladepunkte 8a, 8b, 8c angeschlossen. Weitere vier an den Verteilungsstromkreis 4 angeschlossene Ladepunkte 8d, 8e, 8f, 8g sind als Verbraucher im Ladebetrieb aktiv und beziehen Strom aus dem Stromversorgungssystem 2. Jeder der Ladepunkte 8a bis 8g sowie der Verteilungsstromkreis 4 sind mit einer Überstromschutzeinrichtung 10 ausgestattet, die auslöst, sobald ein Betriebsstrom die zulässige Strombelastbarkeit der Leitung eines Endstromkreises 6 mit bidirektionaler Ladeinfrastruktur oder des Verteilungsstromkreises 4 überschreitet. Die Ladepunkte 8a bis 8g besitzen ferner jeweils eine Schalteinrichtung 12, mit der der Lade-/Rückspeisevorgang unterbrochen oder beendet wird.

In jedem Endstromkreis 6 mit bidirektionaler Ladeinfrastruktur sowie an den Anschlusspunkten 5 des Verteilungsstromkreises 4 sind Strommesseinrichtungen 14 angeordnet, mit denen die momentanen Lade-und Rückspeise-Ströme sowie durch weitere aktive Erzeuger/Verbraucher bewirkte Lastströme erfasst werden. Weitere Strommesseinrichtungen 14 befinden sich im jeweiligen Verteilungsstromkreis 4 zwischen den Endstromkreisen 6.

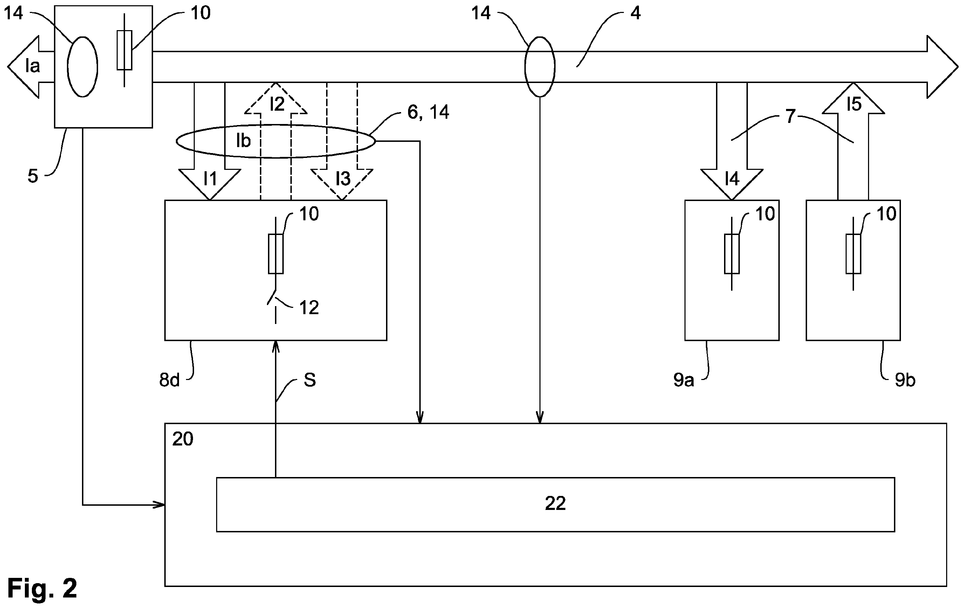

In **Fig. 2** ist die Struktur eines dem erfindungsgemäßen Verfahren zugrundeliegenden kombinierten Lade- und Rückspeisemanagements 20 zusammen mit dem Verteilungsstromkreis 4 und beispielhaft drei daran angeschlossenen Erzeugern/Verbrauchern 8d, 9a, 9b dargestellt. Der Ladepunkt 8d bezieht über den Endstromkreis 6 als Verbraucher einen Bezugsstrom I1, ein weiterer Verbraucher 9a (Wärmepumpe) bezieht über den Endstromkreis 7 einen Bezugsstrom I4. Gleichzeitig speist ein aktiver Erzeuger 9b (PV-Anlage) über den Endstromkreis 7 einen Erzeugerstrom I5 in den Verteilungsstromkreis 4 ein.

Der Ladepunkt 8d, die weiteren Erzeuger 9b/Verbraucher 9a sowie der Verteilungsstromkreis 4 sind jeweils über eine Überstromschutzeinrichtung 10 abgesichert, wobei der bidirektionale Ladepunkt 8d eine Schalteinrichtung 12 zur Abschaltung von der Stromversorgung aufweist.

Über die Strommesseinrichtungen 14 wird der momentane Stromfluss in den bidirektionalen Endstromkreisen 6 der Ladepunkte - hier beispielhaft des Ladepunktes 8d - sowie in dem Verteilungsstromkreis 4 zwischen den Endstromkreisen 6, 7 und in dem Anschlusspunkt 5 des Verteilungsstromkreises 4 erfasst.

Das kombinierte Lade- und Rückspeisemanagement 20 berechnet für den Endstromkreis 6 des Ladepunktes 8d aus dem momentanen Bezugsstrom I1 - bei aktivem Ladevorgang - und/oder einem angefragten Bezugsstrom I3 - bei (noch) nicht gestartetem Ladevorgang oder einer Ladestromänderung - sowie erfindungsgemäß unter Einbeziehung eines angefragten Erzeugerstroms I2 (Rückstrom des bidirektionaler Ladepunktes 8d) einen Betriebsstrom Ib.

Eine Freigabe des angefragten Bezugsstroms I3 in Endstromkreis 6 mit bidirektionaler Ladeinfrastruktur erfolgt mittels eines von einem Freigabemodul 22 erzeugten Schalt-/Steuersignals S nur dann, wenn die zulässige Strombelastbarkeit von dem prognostizierten Betriebsstrom Ib nicht überschritten wird. Überschreitet der prognostizierte Betriebsstrom Ia, Ib die zulässige Strombelastbarkeit eines Leitungsabschnitts (bidirektionaler Endstromkreis 6 oder Verteilungsstromkreis 4), so wird der angefragte Bezugsstrom I3 nicht freigegeben.

Zur Vermeidung einer Überlastung kann weiterhin der Endstromkreis 6 mit bidirektionaler Ladeinfrastruktur über die Schalteinrichtung 12 der Ladeeinrichtung vollständig abgeschaltet werden.

In gleicher Weise wird für alle Endstromkreise 6 mit bidirektionaler Ladeinfrastruktur des Verteilungsstromkreises 4 auf der Grundlage der in dem betreffenden bidirektionalen Endstromkreis 6 fließenden und/oder angefragten Lastströme (Bezugsströme und Einspeiseströme) ein jeweiliger Betriebsstrom Ib berechnet.

Zur Berechnung eines Betriebsstroms Ia an dem Anschlusspunkt 5 des Verteilungsstromkreises 4 werden neben den momentanen und angefragten Bezugsströmen I1, I3, I4 insbesondere und erfindungsgemäß auch die Erzeugerströme, nämlich der angefragte Rückstrom I2 des bidirektionalen Ladepunktes 8d und mittels der weiteren Strommesseinrichtungen 14 zwischen den Endstromkreisen 6, 7 auch der momentane Erzeugerstrom I5 des Erzeugers 9b herangezogen.

## Patentansprüche

1. Verfahren zur Erkennung einer Überlast in einem Stromversorgungssystem (2), welches einen Verteilungsstromkreis (4) mit mindestens zwei Endstromkreisen (6) mit bidirektionaler Ladeinfrastruktur aufweist,
**gekennzeichnet durch**
Auswerten der Stromstärke und der Stromflussrichtung, die sich in jedem Endstromkreis (6) mit bidirektionaler Ladeinfrastruktur aufgrund einer angefragten Ladeleistung und/oder einer angefragten Rückspeiseleistung ergeben würden, in einem kombinierten Lade-und Rückspeisemanagement (20), welches für jeden Leitungsabschnitt des Verteilungsstromkreises (4) einen Betriebsstrom berechnet und eine mögliche Überlast vorausschauend erkennt, um ein Auslösen einer Überstromschutzeinrichtung (10) zu vermeiden.

2. Verfahren nach Anspruch 1,
**dadurch gekennzeichnet,**
**dass** eine Freigabe des Endstromkreises (6) mit bidirektionaler Ladeinfrastruktur durch das Lade- und Rückspeisemanagement (20) für einen Lade- oder einen Rückspeisevorgang nur dann erfolgt, falls in allen betroffenen Leitungsabschnitten des Stromversorgungssystems (2) die zulässige Strombelastbarkeit nicht überschritten wird.

3. Verfahren nach Anspruch 1 oder 2,
**dadurch gekennzeichnet,**
**dass** die Freigabe des Endstromkreises (6) mit bidirektionaler Ladeinfrastruktur durch das Lade- und Rückspeisemanagement (20) mit Vorgeben einer maximalen Lade-Stromstärke und Rückspeise-Stromstärke erfolgt.

4. Verfahren nach Anspruch 1 oder 2,
**dadurch gekennzeichnet,**
**dass** zur Vermeidung einer Überlast der Lade- und/oder Rückspeisebetrieb durch das Lade- und Rückspeisemanagement (20) beendet wird oder eine Anpassung der Lade- und/oder Rückspeiseleistung erfolgt.

5. Verfahren nach einem der Ansprüche 1 bis 4,
**dadurch gekennzeichnet,**
**dass** momentane Lade-und Rückspeise-Stromstärken in den Endstromkreisen (6) mit bidirektionaler Ladeinfrastruktur sowie durch weitere aktive Erzeuger/Verbraucher (9a, 9b) bewirkte Lastströme in dem Verteilungsstromkreis (4) zwischen den Endstromkreisen (6, 7) und an einem Anschlusspunkt (5) des Verteilungsstromkreises (4) erfasst und deren Daten zur Berechnung der Betriebsströme an das Lade- und Rückspeisemanagement (20) weitergeleitet werden.
